# EUROPEAN PATENT APPLICATION

(11) **EP 4 095 089 A1**
(43) Date of publication of application: **30.11.2022**
(21) Application number: 20845554.3
(22) Date of filing: 20.08.2020
(51) Int. Cl.: C01B 3/56

(54) **HYDROGEN PRODUCTION APPARATUS**

(30) Priority: 24.01.2020 JP 2020009585
(71) Applicant: Panasonic Intellectual Property Management Co., Ltd., Osaka-shi, Osaka 540-6207 (JP)
(72) Inventor: YAMAUCHI, Masaki, Osaka 540-6207 (JP); YASUMOTO, Elichi, Osaka 540-6207 (JP); OZEKI, Masataka, Osaka 540-6207 (JP)
(74) Representative: Grünecker Patent- und Rechtsanwälte PartG mbB
(86) International application number: PCT/JP2020/031377
(87) International publication number: WO 2021/149291

(57) **Abstract**

A hydrogen production apparatus of the present disclosure includes: a gas supply unit that supplies a first hydrogen-containing gas containing hydrogen; a first electrochemical device having a first anode side inlet to make the first hydrogen-containing gas flow in and a first cathode side outlet to make a second hydrogen-containing gas having a higher concentration of hydrogen than the first hydrogen-containing gas flow out; and a second electrochemical device having a second anode side inlet to make the second hydrogen-containing gas flow in and a second cathode side outlet to make a third hydrogen-containing gas having a higher concentration of hydrogen than the second hydrogen-containing gas flow out. It is configured such that the ratio of the pressure value of the third hydrogen-containing gas at the second cathode side outlet to the pressure value of the second hydrogen-containing gas at the second anode side inlet is higher than the ratio of the pressure value of the second hydrogen-containing gas at the first cathode side outlet to the pressure value of the first hydrogen-containing gas at the first anode side inlet.

## Description

### TECHNICAL FIELD

The present disclosure relates to a hydrogen production apparatus that produces high-purity and high-pressure hydrogen from a hydrogen-containing gas by utilizing an electrochemical reaction.

### BACKGROUND ART

PTL 1 discloses an electrochemical device that provides hydrogen by purifying it from a hydrogen-containing gas and compressing it. The electrochemical device includes an electrolyte membrane disposed between an anode and a cathode.

### Citation List

### Patent Literature

PTL 1: Japanese Translation of PCT Publication No. 2016-530188

### SUMMARY OF THE INVENTION

The present disclosure provides a highly durable hydrogen production apparatus capable of achieving both high mechanical deterioration resistance and high chemical deterioration resistance in an electrolyte membrane-electrode assembly.

The hydrogen production apparatus in the present disclosure includes: a gas supply unit that supplies a first hydrogen-containing gas containing hydrogen; a first electrochemical device having a first electrolyte membrane-electrode assembly, a first anode separator, and a first cathode separator; and a second electrochemical device having a second electrolyte membrane-electrode assembly, a second anode separator, and a second cathode separator.

The first electrolyte membrane-electrode assembly has: a first electrolyte membrane; a first anode that is disposed on one main surface of the first electrolyte membrane and causes an oxidation reaction to dissociate the hydrogen contained in the first hydrogen-containing gas into hydrogen ions and electrons; and a first cathode that is disposed on the other main surface of the first electrolyte membrane and causes a reduction reaction to combine the electrons and the hydrogen ions that have permeated the first electrolyte membrane in order to generate hydrogen.

The first anode separator has a first anode flow path formed such that the first hydrogen-containing gas flows on a surface in contact with the first anode, and a first anode side inlet to make the first hydrogen-containing gas flow into the upstream of the first anode flow path.

The first cathode separator has a first cathode flow path formed on a surface in contact with the first cathode, and a first cathode side outlet to make a second hydrogen-containing gas having a higher concentration of hydrogen than the first hydrogen-containing gas flow out from the first cathode flow path.

The second electrolyte membrane-electrode assembly has: a second electrolyte membrane; a second anode that is disposed on one main surface of the second electrolyte membrane and causes an oxidation reaction to dissociate the hydrogen contained in the second hydrogen-containing gas into hydrogen ions and electrons; and a second cathode that is disposed on the other main surface of the second electrolyte membrane and causes a reduction reaction to combine the electrons and the hydrogen ions that have permeated the second electrolyte membrane in order to generate hydrogen.

The second anode separator has a second anode flow path formed such that the second hydrogen-containing gas flows on a surface in contact with the second anode, and a second anode side inlet to make the second hydrogen-containing gas flow into the upstream of the second anode flow path.

The second cathode separator has a second cathode flow path formed on a surface in contact with the second cathode, and a second cathode side outlet to make a third hydrogen-containing gas having a higher concentration of hydrogen than the second hydrogen-containing gas flow out from the second cathode flow path.

The hydrogen production apparatus is configured such that a ratio of the pressure value of the third hydrogen-containing gas at the second cathode side outlet to the pressure value of the second hydrogen-containing gas at the second anode side inlet is higher than that of the pressure value of the second hydrogen-containing gas at the first cathode side outlet to the pressure value of the first hydrogen-containing gas at the first anode side inlet.

The hydrogen production apparatus of the present disclosure is configured such that a hydrogen-containing gas, which has been refined, that is, purified, and pressurized, that is, compressed by the first electrochemical device, is further refined, that is, purified, and pressurized, that is, compressed, by the second electrochemical device.

The first electrochemical device located upstream has a smaller pressure difference between the anode and the cathode than the second electrochemical device located downstream. Therefore, the mechanical deterioration of the electrolyte membrane-electrode assembly is suppressed. Therefore, the design of the first electrochemical device located upstream can be specialized in suppressing the chemical deterioration of the electrolyte membrane-electrode assembly, that is, the performance against the chemical deterioration can be prioritized.

Further, to the second electrochemical device located downstream, a hydrogen-containing gas, with fewer impurities than the hydrogen-containing gas to be supplied to the first electrochemical device located upstream, is supplied from the first electrochemical device located upstream. Therefore, in the second electrochemical device, the chemical deterioration of the electrolyte membrane-electrode assembly, that is, catalyst poisoning by carbon monoxide, is more suppressed than in the first electrochemical device. Therefore, the design of the second electrochemical device located downstream can be specialized in suppressing the mechanical deterioration of the electrolyte membrane-electrode assembly, that is, the performance against the mechanical deterioration can be prioritized. Therefore, the second electrochemical device located downstream can have a larger pressure difference between the anode and the cathode than the first electrochemical device located upstream.

As a result, both higher mechanical deterioration resistance and higher chemical deterioration resistance can be achieved in the electrolyte membrane-electrode assembly than when one electrochemical device is used to produce high-purity and high-pressure hydrogen from a hydrogen-containing gas, or when two electrochemical devices are used to be connected in series such that the pressure difference between the anode and cathode of an electrochemical device located downstream is less than or equal to that between the anode and the cathode of an electrochemical device located upstream. Therefore, a highly durable hydrogen production apparatus can be provided.

### BRIEF DESCRIPTION OF DRAWINGS

FIG. 1 is a schematic view showing a hydrogen production apparatus according to a first exemplary embodiment and a third exemplary embodiment.
FIG. 2 is a schematic view showing a hydrogen production apparatus according to a second exemplary embodiment.

### DESCRIPTION OF EMBODIMENTS

### (Findings, etc., on which the present disclosure is based)

At the time when the inventors came up with the present disclosure, there was a technology to produce high-purity and high-pressure hydrogen from a low-purity hydrogen-containing gas by an electrochemical device having an anode, a cathode, and an electrolyte membrane disposed between the anode and the cathode. Thereby, it was common in the industry to obtain high-purity and high-pressure hydrogen using one electrochemical device.

However, the present inventors have found a problem that when high-purity and high-pressure hydrogen is produced from a hydrogen-containing gas containing a large amount of impurities by one electrochemical device, chemical deterioration caused by the hydrogen containing a large amount of impurities and mechanical deterioration caused by the high-pressure hydrogen progress in the same electrolyte membrane-electrode assembly, so that it is difficult to ensure sufficient durability. The present inventors have come to construct the subject matter of the present disclosure in order to solve the problem found.

The present disclosure provides a highly durable hydrogen production apparatus that can produce high-purity and high-pressure hydrogen from a hydrogen-containing gas and achieve both high mechanical deterioration resistance and high chemical deterioration resistance in an electrolyte membrane-electrode assembly.

Hereinafter, exemplary embodiments will be described in detail with reference to the drawings. However, more detailed description than necessary may be omitted. For example, detailed description of already well-known matters or duplicate description of substantially the same configurations may be omitted. This is to avoid unnecessary redundancy in the following description and to facilitate understanding by those skilled in the art.

Note that the attached drawings and the following description are provided for those skilled in the art to fully understand the present disclosure, and they are not intended to limit the subject matters described in the appended claims.

### (First exemplary embodiment)

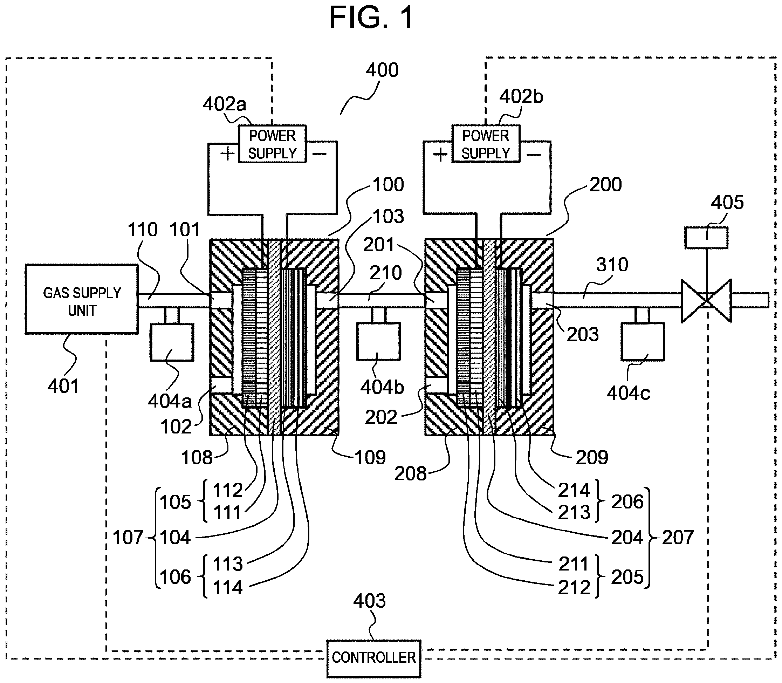

Hereinafter, a first exemplary embodiment will be described with reference to FIG. 1.

### [1-1. Configuration]

As shown in FIG. 1, hydrogen production apparatus 400 of the first exemplary embodiment includes first electrochemical device 100, second electrochemical device 200, and gas supply unit 401 that supplies a first hydrogen-containing gas containing water vapor, hydrogen, and impurities.

First electrochemical device 100 is configured such that first electrolyte membrane-electrode assembly 107, having first anode 105 on one main surface of first electrolyte membrane 104 and first cathode 106 on the other main surface, is sandwiched by first anode separator 108 and first cathode separator 109.

In first electrochemical device 100, when the first hydrogen-containing gas is supplied to first anode 105 and a current is applied to first cathode 106 from first anode 105 via first electrolyte membrane 104, first anode 105 causes an oxidation reaction to dissociate the hydrogen contained in the first hydrogen-containing gas into hydrogen ions and electrons. The hydrogen ions permeate first electrolyte membrane 104. First cathode 106 causes a reduction reaction to combine the hydrogen ions and the electrons in order to generate hydrogen. Thereby, a second hydrogen-containing gas having a higher concentration of hydrogen than the first hydrogen-containing gas is generated.

First anode separator 108 has: a first anode flow path formed in a groove shape such that the first hydrogen-containing gas flows on a surface in contact with first anode 105; and first anode side inlet 101 to make the first hydrogen-containing gas flow into the upstream of the first anode flow path; and first anode side outlet 102 to make the first hydrogen-containing gas unused flow out from the downstream of the first anode flow path.

First cathode separator 109 has a first cathode flow path formed in a groove shape on a surface in contact with first cathode 106, and first cathode side outlet 103 to make the second hydrogen-containing gas flow out from the first cathode flow path.

Second electrochemical device 200 is configured such that second electrolyte membrane-electrode assembly 207, having second anode 205 on one main surface of second electrolyte membrane 204 and second cathode 206 on the other main surface, is sandwiched by second anode separator 208 and second cathode separator 209.

In second electrochemical device 200, when the second hydrogen-containing gas is supplied to second anode 205 and a current is applied to second cathode 206 from second anode 205 via second electrolyte membrane 204, second anode 205 causes an oxidation reaction to dissociate the hydrogen contained in the second hydrogen-containing gas into hydrogen ions and electrons. The hydrogen ions permeate second electrolyte membrane 204. Second cathode 206 causes a reduction reaction to combine the hydrogen ions and the electrons in order to generate hydrogen. Thereby, a third hydrogen-containing gas having a higher concentration of hydrogen than the second hydrogen-containing gas is generated.

Second anode separator 208 has: a second anode flow path formed in a groove shape such that the second hydrogen-containing gas flows on a surface in contact with second anode 205; second anode side inlet 201 to make the second hydrogen-containing gas flow into the upstream of the second anode flow path; and second anode side outlet 202 to make the second hydrogen-containing gas unused flow out from the downstream of the second anode flow path.

Second cathode separator 209 has a second cathode flow path formed in a groove shape on a surface in contact with second cathode 206, and second cathode side outlet 203 to make the third hydrogen-containing gas flow out from the second cathode flow path.

Gas supply unit 401 is formed of a fuel reformer. Gas supply unit 401 supplies the first hydrogen-containing gas generated from city gas by a reforming reaction to first anode 105 of first electrochemical device 100 via first connection flow path 110. First connection flow path 110 connects gas supply unit 401 and first anode side inlet 101 of first electrochemical device 100.

The first hydrogen-containing gas generated and supplied by gas supply unit 401 contains water vapor, hydrogen, carbon dioxide, and carbon monoxide.

First cathode side outlet 103 of first electrochemical device 100 is connected to second anode side inlet 201 of second electrochemical device 200 by second connection flow path 210.

Third connection flow path 310 is connected to second cathode side outlet 203 of second electrochemical device 200. One end of valve 405 is connected to one end downstream of third connection flow path 310. A fourth connection flow path that supplies the third hydrogen-containing gas to hydrogen utilization equipment is connected to the other end of valve 405. The hydrogen utilization equipment is, for example, a fuel cell that generates electricity by using a hydrogen-containing gas.

Power supply 402a that applies a current to first cathode 106 from first anode 105 via first electrolyte membrane 104 is connected to first electrochemical device 100. As power supply 402a, a DC power supply that applies a current having a specified current value, that is, a constant current power supply is used. The positive pole of power supply 402a is electrically connected to first anode 105. The negative pole of power supply 402a is electrically connected to first cathode 106.

Power supply 402b that applies a current to second cathode 206 from second anode 205 via second electrolyte membrane 204 is connected to second electrochemical device 200. As power supply 402b, a DC power supply that applies a current having a specified current value, that is, a constant current power supply is used. The positive pole of power supply 402b is electrically connected to second anode 205. The negative pole of power supply 402b is electrically connected to second cathode 206.

The operations of gas supply unit 401, power supply 402a, power supply 402b, and valve 405 are controlled by controller 403.

The first hydrogen-containing gas unused flowing out from first anode side outlet 102 may be mixed with, for example, the city gas supplied to gas supply unit 401. Additionally, the first hydrogen-containing gas unused may be used as fuel for heating gas supply unit 401 to a temperature suitable for the reforming reaction. Further, the first hydrogen-containing gas unused may be mixed with the first hydrogen-containing gas in first connection flow path 110 after at least a part of the impurities contained in the first hydrogen-containing gas unused is removed. That is, it is desirable that the first hydrogen-containing gas unused flowing out from first anode side outlet 102 is effectively utilized.

The second hydrogen-containing gas unused flowing out from second anode side outlet 202 may be mixed with, for example, the first hydrogen-containing gas in first connection flow path 110. Additionally, the second hydrogen-containing gas unused may be mixed with the second hydrogen-containing gas in second connection flow path 210 after at least a part of the impurities contained in the second hydrogen-containing gas unused is removed. That is, it is desirable that the second hydrogen-containing gas unused flowing out from second anode side outlet 202 is effectively utilized.

First electrolyte membrane 104 is formed by impregnating both sides of a porous sheet made of polytetrafluoroethylene (PTFE) used as a reinforcing material with a fluorine-based electrolyte resin having a sulfonic acid group. The thickness of first electrolyte membrane 104 is 30 pm. Of the 30 pm, the thickness of the reinforcing material is 10 pm, and the thickness of the electrolyte resin is 20 pm.

First anode 105 has first anode catalyst layer 111 in contact with first electrolyte membrane 104, and first anode gas diffusion layer 112 in contact with first anode separator 108.

First anode catalyst layer 111 is formed by coating and forming a mixture of platinum-supported carbon particles and a fluorine-based electrolyte resin having a sulfonic acid group on first electrolyte membrane 104. Carbon paper made of carbon fibers is used for first anode gas diffusion layer 112.

First cathode 106 has first cathode catalyst layer 113 in contact with first electrolyte membrane 104, and first cathode gas diffusion layer 114 in contact with first cathode separator 109.

First cathode catalyst layer 113 is formed by coating and forming a mixture of platinum-supported carbon particles and a fluorine-based electrolyte resin having a sulfonic acid group on first electrolyte membrane 104. Carbon paper made of carbon fibers is used for first cathode gas diffusion layer 114.

First anode separator 108 and first cathode separator 109 are formed of compressed carbon, which is a conductive member having low gas permeability.

Second electrolyte membrane 204 is formed by impregnating both sides of a porous sheet made of polytetrafluoroethylene (PTFE) used as a reinforcing material with a fluorine-based electrolyte resin having a sulfonic acid group. The thickness of second electrolyte membrane 204 is 30 pm. Of the 30 pm, the thickness of the reinforcing material is 20 pm, and the thickness of the electrolyte resin is 10 µm.

Second anode 205 has second anode catalyst layer 211 in contact with second electrolyte membrane 204, and second anode gas diffusion layer 212 in contact with second anode separator 208.

Second anode catalyst layer 211 is formed by coating and forming a mixture of platinum-supported carbon particles and a fluorine-based electrolyte resin having a sulfonic acid group on second electrolyte membrane 204. Carbon paper made of carbon fibers is used for second anode gas diffusion layer 212.

Second cathode 206 has second cathode catalyst layer 213 in contact with second electrolyte membrane 204, and second cathode gas diffusion layer 214 in contact with second cathode separator 209.

Second cathode catalyst layer 213 is formed by coating and forming a mixture of platinum-supported carbon particles and a fluorine-based electrolyte resin having a sulfonic acid group on second electrolyte membrane 204. Carbon paper made of carbon fibers is used for second cathode gas diffusion layer 214.

Second anode separator 208 and second cathode separator 209 are formed of compressed carbon, which is a conductive member having low gas permeability.

Pressure gauge 404a is installed in first connection flow path 110 in order to measure the pressure of the first hydrogen-containing gas in first connection flow path 110. Controller 403 controls the flow rates of the city gas and water supplied to gas supply unit 401 and the current value of the current that power supply 402a applies to first cathode 106 from first anode 105 via first electrolyte membrane 104, such that the absolute pressure, measured by pressure gauge 404a, of the first hydrogen-containing gas becomes a predetermined value.

Pressure gauge 404b is installed in second connection flow path 210 in order to measure the pressure of the second hydrogen-containing gas in second connection flow path 210. Controller 403 controls the current value of the current that power supply 402b applies to second cathode 206 from second anode 205 via second electrolyte membrane 204, such that the absolute pressure, measured by pressure gauge 404b, of the second hydrogen-containing gas becomes a predetermined value.

Pressure gauge 404c is installed in third connection flow path 310 in order to measure the pressure of the third hydrogen-containing gas in third connection flow path 310.

Valve 405 is formed of a needle valve whose opening can be adjusted. Controller 403 adjusts the opening of valve 405 such that the absolute pressure, measured by pressure gauge 404c, of the third hydrogen-containing gas becomes a predetermined value.

The flow path resistance of first anode side outlet 102, that is, the flow path resistance including a first anode off-gas path connected to first anode side outlet 102 is designed such that the absolute pressure, measured by pressure gauge 404a, of the first hydrogen-containing gas becomes the predetermined value by controlling the flow rates of the city gas and water supplied to gas supply unit 401 and the current value of power supply 402a while hydrogen production apparatus 400 is operating.

The flow path resistance of second anode side outlet 202, that is, the flow path resistance including a second anode off-gas path connected to second anode side outlet 202 is designed such that the absolute pressure, measured by pressure gauge 404b, of the second hydrogen-containing gas becomes the predetermined value by controlling the current value of power supply 402b while hydrogen production apparatus 400 is operating.

### [1-2. Operation]

The operation and action of hydrogen production apparatus 400 of the present exemplary embodiment, configured as described above, will be described below.

First, gas supply unit 401 supplies the first hydrogen-containing gas having a dew point temperature of 65°C to first anode 105 via first connection flow path 110, first anode side inlet 101, and the first anode flow path.

In the present exemplary embodiment, the first hydrogen-containing gas has a hydrogen content ratio of 80%, a carbon dioxide content ratio of 20%, and a carbon monoxide content ratio of 15 ppm. However, the numerical values of these content ratios are the content ratios of the first hydrogen-containing gas in the state where water vapor is removed, that is, in a dry state. The dew point temperature and content ratios of the first hydrogen-containing gas are not limited to the above numerical values.

While the first hydrogen-containing gas is being supplied to first anode 105, power supply 402a applies a current to first cathode 106 from first anode 105 via first electrolyte membrane 104.

Thereby, in first electrochemical device 100, an oxidation reaction to dissociate the hydrogen contained in the first hydrogen-containing gas into hydrogen ions and electrons is caused at first anode 105. The hydrogen ions permeate first electrolyte membrane 104 and move to first cathode 106. The electrons move to first cathode 106 via power supply 402a. At first cathode 106, a reduction reaction to combine the hydrogen ions and the electrons in order to generate hydrogen is caused. Thereby, at first cathode 106 of first electrochemical device 100, the second hydrogen-containing gas having a higher concentration of hydrogen than the first hydrogen-containing gas is generated.

In the present exemplary embodiment, the second hydrogen-containing gas has a hydrogen content ratio of 99.1%, a carbon dioxide content ratio of 0.9%, and a carbon monoxide content ratio of 1 ppm. However, the numerical values of these content ratios are the content ratios of the second hydrogen-containing gas in the state where water vapor is removed, that is, in a dry state. The content ratios of the second hydrogen-containing gas are not limited to the above numerical values.

At this time, the pressure value of the first hydrogen-containing gas in first connection flow path 110 is measured by pressure gauge 404a. Controller 403 controls the flow rates of the city gas and water supplied to gas supply unit 401 and the current value of the current that power supply 402a applies to first cathode 106 from first anode 105 via first electrolyte membrane 104, such that the pressure value of the first hydrogen-containing gas in first connection flow path 110 becomes an absolute pressure of 120 kPa. The pressure value, controlled by controller 403, of the first hydrogen-containing gas in first connection flow path 110 is not limited to the above numerical value.

By increasing or decreasing the flow rates of the city gas and water supplied to gas supply unit 401, the flow rate of the first hydrogen-containing gas discharged, that is, supplied from gas supply unit 401 can be increased or decreased. Additionally, by increasing or decreasing the current value of the current that power supply 402a applies to first cathode 106 from first anode 105 via first electrolyte membrane 104, the flow rate of the hydrogen moving from first anode 105 to first cathode 106, among the first hydrogen-containing gas supplied to first anode side inlet 101, that is, the flow rate of the second hydrogen-containing gas can be increased or decreased.

Among the first hydrogen-containing gas supplied to first anode side inlet 101, the first hydrogen-containing gas unused that has not moved from first anode 105 to first cathode 106 is discharged from first anode side outlet 102.

The second hydrogen-containing gas discharged from first cathode side outlet 103 of first electrochemical device 100 is supplied to second anode 205 via second connection flow path 210, and second anode side inlet 201 and the second anode flow path of second electrochemical device 200.

While the second hydrogen-containing gas is being supplied to second anode 205, power supply 402b applies a current to second cathode 206 from second anode 205 via second electrolyte membrane 204.

Thereby, in second electrochemical device 200, an oxidation reaction to dissociate the hydrogen contained in the second hydrogen-containing gas into hydrogen ions and electrons is caused at second anode 205. The hydrogen ions permeate second electrolyte membrane 204 and move to second cathode 206. The electrons move to second cathode 206 via power supply 402b. At second cathode 206, a reduction reaction to combine the hydrogen ions and the electrons in order to generate hydrogen is caused. Thereby, at second cathode 206 of second electrochemical device 200, the third hydrogen-containing gas having a higher concentration of hydrogen than the second hydrogen-containing gas is generated.

In the present exemplary embodiment, the third hydrogen-containing gas has a hydrogen content ratio of 99.98% and a carbon dioxide content ratio of 0.02%. However, the numerical values of these content ratios are the content ratios of the third hydrogen-containing gas in the state where water vapor is removed, that is, in a dry state. The content ratios of the third hydrogen-containing gas are not limited to the above numerical values.

At this time, the pressure value of the second hydrogen-containing gas in second connection flow path 210 is measured by pressure gauge 404b. Controller 403 controls the current value of the current that power supply 402b applies to second cathode 206 from second anode 205 via second electrolyte membrane 204, such that the pressure value of the second hydrogen-containing gas in second connection flow path 210 becomes an absolute pressure of 220 kPa. The pressure value, controlled by controller 403, of the second hydrogen-containing gas in second connection flow path 210 is not limited to the above numerical value.

By increasing or decreasing the current value of the current that power supply 402b applies to second cathode 206 from second anode 205 via second electrolyte membrane 204, the flow rate of the hydrogen moving from second anode 205 to second cathode 206, among the second hydrogen-containing gas supplied to second anode side inlet 201, that is, the flow rate of the third hydrogen-containing gas can be increased or decreased.

Among the second hydrogen-containing gas supplied to second anode side inlet 201, the second hydrogen-containing gas unused that has not moved from second anode 205 to second cathode 206 is discharged from second anode side outlet 202.

Further, the pressure value of the third hydrogen-containing gas in third connection flow path 310 is measured by pressure gauge 404c. Controller 403 adjusts the opening of valve 405 such that the pressure value of the third hydrogen-containing gas in third connection flow path 310 becomes an absolute pressure of 50 MPa. The pressure value, controlled by controller 403, of the third hydrogen-containing gas in third connection flow path 310 is not limited to the above numerical value.

When the opening is adjusted in a direction in which valve 405 is opened, the pressure value of the third hydrogen-containing gas in third connection flow path 310 decreases. When the opening is adjusted in a direction in which valve 405 is closed, the pressure value of the third hydrogen-containing gas in third connection flow path 310 increases. Therefore, by adjusting the opening of valve 405 as described above, hydrogen whose absolute pressure is compressed to 50 MPa, that is, the third hydrogen-containing gas can be obtained from second electrochemical device 200.

In the present exemplary embodiment, the ratio of the pressure value of the third hydrogen-containing gas at second cathode side outlet 203 to the pressure value of the second hydrogen-containing gas at second anode side inlet 201 is 227. The ratio of the pressure value of the second hydrogen-containing gas at first cathode side outlet 103 to the pressure value of the first hydrogen-containing gas at first anode side inlet 101 is 2.

### [1-3. Effects, etc.]

As described above, hydrogen production apparatus 400 of the present exemplary embodiment includes: gas supply unit 401 that supplies the first hydrogen-containing gas containing hydrogen; first electrochemical device 100 that generates the second hydrogen-containing gas from the first hydrogen-containing gas; and second electrochemical device 200 that generates the third hydrogen-containing gas from the second hydrogen-containing gas.

First electrochemical device 100 is configured such that first electrolyte membrane-electrode assembly 107, formed by both first anode 105 that is disposed on one main surface of first electrolyte membrane 104 and causes an oxidation reaction to dissociate the hydrogen contained in the first hydrogen-containing gas into hydrogen ions and electrons and first cathode 106 that is disposed on the other main surface of first electrolyte membrane 104 and causes a reduction reaction to combine the electrons and the hydrogen ions that have permeated first electrolyte membrane 104 in order to generate hydrogen, is sandwiched by first anode separator 108 and first cathode separator 109.

First anode separator 108 has the first anode flow path formed such that the first hydrogen-containing gas flows on a surface in contact with first anode 105, and first anode side inlet 101 to make the first hydrogen-containing gas flow into the upstream of the first anode flow path.

First cathode separator 109 has the first cathode flow path formed on the surface in contact with first cathode 106, and first cathode side outlet 103 to make the second hydrogen-containing gas having a higher concentration of hydrogen than the first hydrogen-containing gas flow out from the first cathode flow path.

Second electrochemical device 200 is configured such that second electrolyte membrane-electrode assembly 207, formed by both second anode 205 that is disposed on one main surface of second electrolyte membrane 204 and causes an oxidation reaction to dissociate the hydrogen contained in the second hydrogen-containing gas into hydrogen ions and electrons and second cathode 206 that is disposed on the other main surface of second electrolyte membrane 204 and causes a reduction reaction to combine the electrons and the hydrogen ions that have permeated second electrolyte membrane 204 in order to generate hydrogen, is sandwiched by second anode separator 208 and second cathode separator 209.

Second anode separator 208 has the second anode flow path formed such that the second hydrogen-containing gas flows on the surface in contact with second anode 205, and second anode side inlet 201 to make the second hydrogen-containing gas flow into the upstream of the second anode flow path.

Second cathode separator 209 has the second cathode flow path formed on the surface in contact with second cathode 206, and second cathode side outlet 203 to make the third hydrogen-containing gas having a higher concentration of hydrogen than the second hydrogen-containing gas flow out from the second cathode flow path.

It is configured such that the ratio of the pressure value of the third hydrogen-containing gas at second cathode side outlet 203 to the pressure value of the second hydrogen-containing gas at second anode side inlet 201 is higher than the ratio of the pressure value of the second hydrogen-containing gas at first cathode side outlet 103 to the pressure value of the first hydrogen-containing gas at first anode side inlet 101.

In other words, it is configured such that the ratio of the pressure value of the third hydrogen-containing gas at second cathode 206 to the pressure value of the second hydrogen-containing gas at second anode 205 is higher than the ratio of the pressure value of the second hydrogen-containing gas at first cathode 106 to the pressure value of the first hydrogen-containing gas at first anode 105.

Therefore, hydrogen production apparatus 400 includes first electrochemical device 100 whose main purpose is to purify hydrogen from a hydrogen-containing gas, and second electrochemical device 200 whose main purpose is to compress hydrogen.

First electrochemical device 100 located upstream has a smaller pressure difference between the anode and the cathode than second electrochemical device 200 located downstream. Therefore, the mechanical deterioration of first electrolyte membrane-electrode assembly 107 is suppressed. Therefore, the design of first electrochemical device 100 located upstream can be specialized in suppressing the chemical deterioration of first electrolyte membrane-electrode assembly 107, that is, the performance against the chemical deterioration can be prioritized.

Further, to second electrochemical device 200 located downstream, the second hydrogen-containing gas, with fewer impurities than the first hydrogen-containing gas to be supplied to first electrochemical device 100 located upstream, is supplied from first electrochemical device 100 located upstream. Therefore, in second electrochemical device 200 located downstream, the chemical deterioration of the electrolyte membrane-electrode assembly, that is, catalyst poisoning by carbon monoxide is more suppressed than in the first electrochemical device. Therefore, the design of second electrochemical device 200 located downstream can be specialized in suppressing the mechanical deterioration of electrolyte membrane-electrode assembly 207, that is, the performance against the mechanical deterioration can be preferentially specialized. Therefore, second electrochemical device 200 located downstream can have a larger pressure difference between the anode and the cathode than first electrochemical device 100 located upstream.

As a result, both higher mechanical deterioration resistance and higher chemical deterioration resistance can be achieved in the electrolyte membrane-electrode assembly than when one electrochemical device is used to produce high-purity and high-pressure hydrogen from a hydrogen-containing gas, or when two electrochemical devices are used to be connected in series such that the pressure difference between the anode and cathode of an electrochemical device located downstream is less than or equal to that between the anode and the cathode of an electrochemical device located upstream. Therefore, hydrogen production apparatus 400 that is highly durable can be provided.

Additionally, in hydrogen production apparatus 400 of the present exemplary embodiment, first anode separator 108 may further have first anode side outlet 102 to make the first hydrogen-containing gas unused flow out from the downstream of the first anode flow path. Second anode separator 208 may further have second anode side outlet 202 to make the second hydrogen-containing gas unused flow out from the downstream of the second anode flow path.

The first hydrogen-containing gas unused flowing out from first anode side outlet 102 is effectively utilized by, for example, being mixed with the city gas supplied to gas supply unit 401. Additionally, the second hydrogen-containing gas unused flowing out from second anode side outlet 202 is effectively utilized by, for example, being mixed with the first hydrogen-containing gas in first connection flow path 110. Therefore, the hydrogen-containing gas unused can be effectively utilized, so that the efficiency of the hydrogen production apparatus can be enhanced.

Additionally, hydrogen production apparatus 400 of the present exemplary embodiment may include a first gas seal that is provided in first electrochemical device 100 in order to suppress the leakage of the hydrogen-containing gas circulating through first electrolyte membrane-electrode assembly 107, and a second gas seal that is provided in second electrochemical device 200 in order to suppress the leakage of the hydrogen-containing gas circulating through second electrolyte membrane-electrode assembly 207. Specifically, the first gas seal may be provided between first anode separator 108 and first electrolyte membrane 104 so as to surround first anode 105, and between first cathode separator 109 and first electrolyte membrane 104 so as to surround first cathode 106. The second gas seal may be provided between second anode separator 208 and second electrolyte membrane 204 so as to surround second anode 205, and between second cathode separator 209 and second electrolyte membrane 204 so as to surround second cathode 206. It may be configured such that the pressure resistance of the second gas seal is higher than the pressure resistance of the first gas seal.

Thereby, hydrogen production apparatus 400 can achieve, in first electrochemical device 100, a reduction in the amount of a sealing material used, simplification of a fastening structure, and the like. Additionally, since the pressure resistance of the second gas seal in second electrochemical device 200 is high, the leakage of the high-pressure hydrogen to the outside can be suppressed. Therefore, a low-cost and highly reliable hydrogen production apparatus can be provided.

Additionally, in hydrogen production apparatus 400 of the present exemplary embodiment, first electrolyte membrane-electrode assembly 107, first anode separator 108, and first cathode separator 109 may be substantially rectangular. Second electrolyte membrane-electrode assembly 207, second anode separator 208, and second cathode separator 209 may be substantially circular or substantially elliptical.

Since first electrolyte membrane-electrode assembly 107, first anode separator 108, and first cathode separator 109 are substantially rectangular, the space filling property, occurring when disposed in hydrogen production apparatus 400, is excellent, that is, the space filling property, occurring when disposed in hydrogen production apparatus 400, is improved. Additionally, since second electrolyte membrane-electrode assembly 207, second anode separator 208, and second cathode separator 209 are substantially circular or substantially elliptical, the pressure distribution is uniform in the circumferential direction. Therefore, even if the hydrogen circulating through second electrolyte membrane-electrode assembly 207 has a high pressure, the hydrogen is suppressed from leaking to the outside. Therefore, this is effective in producing high-pressure hydrogen, and a hydrogen production apparatus that is compact and has little leakage of hydrogen can be provided.

Additionally, in hydrogen production apparatus 400 of the present exemplary embodiment, it may be configured such that: first anode 105 has first anode catalyst layer 111 containing a platinum ruthenium alloy and an electrolyte resin on a surface in contact with first electrolyte membrane 104; and second anode 205 has second anode catalyst layer 211 containing platinum and an electrolyte resin on a surface in contact with second electrolyte membrane 204.

Since first anode 105 has first anode catalyst layer 111 containing a platinum ruthenium alloy and an electrolyte resin near to the electrolyte membrane, platinum poisoning by carbon monoxide is suppressed even if the first hydrogen-containing gas containing a trace amount of carbon monoxide is supplied to first anode 105. Therefore, the deterioration of first anode catalyst layer 111 is suppressed. Additionally, since second anode 205 has second anode catalyst layer 211 containing platinum and an electrolyte resin near to the electrolyte membrane, hydroxyl group attraction by ruthenium is less likely to occur. Therefore, the oxidation of platinum is suppressed, and the deterioration of second anode catalyst layer 211 is suppressed. Therefore, a highly durable hydrogen production apparatus can be provided.

### (Second exemplary embodiment)

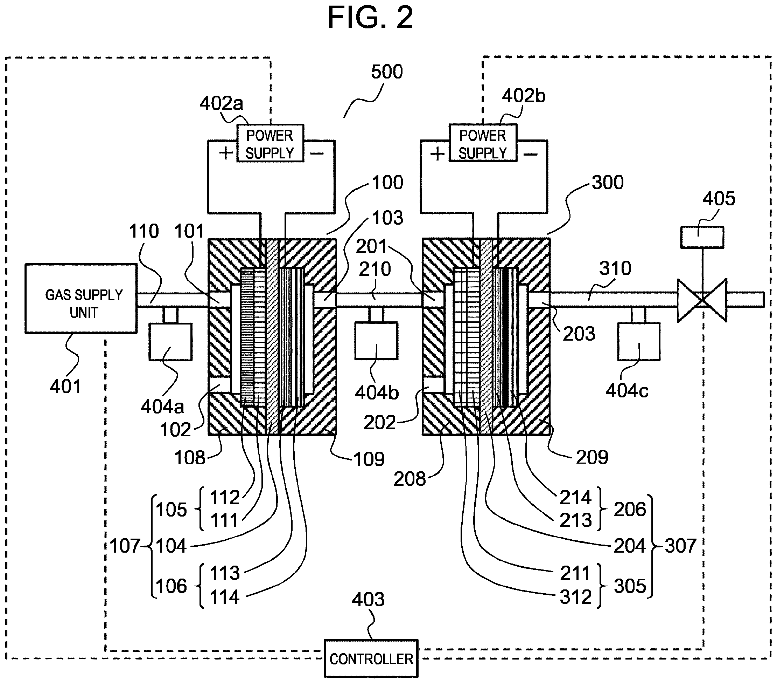

Hereinafter, a second exemplary embodiment will be described with reference to FIG. 2.

### [2-1. Configuration]

Hydrogen production apparatus 500 according to the second exemplary embodiment is configured such that second electrolyte membrane-electrode assembly 307 of second electrochemical device 300 has a higher tensile strength than that of first electrolyte membrane-electrode assembly 107 of first electrochemical device 100.

Specifically, as the constituent material of second anode gas diffusion layer 312 on the side where second anode separator 208 is provided for second electrolyte membrane 204 at second anode 305 of second electrolyte membrane-electrode assembly 307, a material, having a higher tensile strength than first anode gas diffusion layer 112 on the side where first anode separator 108 is provided for first electrolyte membrane 104 at first anode 105 of first electrolyte membrane-electrode assembly 107, is used. The constituent material of first anode gas diffusion layer 112 is, for example, carbon paper made of carbon fibers. The constituent material of second anode gas diffusion layer 312 is, for example, a titanium powder sintered body plated with platinum.

Other configurations of second electrolyte membrane-electrode assembly 307 are the same as those of second electrolyte membrane-electrode assembly 207 of hydrogen production apparatus 400 of the first exemplary embodiment, and duplicate description will be omitted.

Hereinafter, the materials and structures of the components of second electrolyte membrane-electrode assembly 307, second electrochemical device 300, and hydrogen production apparatus 500 according to the second exemplary embodiment will be specifically described with reference to FIG. 2.

As shown in FIG. 2, hydrogen production apparatus 500 of the second exemplary embodiment includes first electrochemical device 100, second electrochemical device 300, and gas supply unit 401 that supplies a first hydrogen-containing gas containing water vapor, hydrogen, and impurities.

Second electrochemical device 300 is configured such that second electrolyte membrane-electrode assembly 307, having second anode 305 on one main surface of second electrolyte membrane 204 and second cathode 206 on the other main surface, is sandwiched by second anode separator 208 and second cathode separator 209.

In second electrochemical device 300, when a second hydrogen-containing gas is supplied to second anode 305 and a current is applied to second cathode 206 from second anode 305 via second electrolyte membrane 204, second anode 305 causes an oxidation reaction to dissociate the hydrogen contained in the second hydrogen-containing gas into hydrogen ions and electrons. The hydrogen ions permeate second electrolyte membrane 204. Second cathode 206 causes a reduction reaction to combine the hydrogen ions and the electrons in order to generate hydrogen. Thereby, a third hydrogen-containing gas having a higher concentration of hydrogen than the second hydrogen-containing gas is generated.

First cathode side outlet 103 of first electrochemical device 100 is connected to second anode side inlet 201 of second electrochemical device 300 by second connection flow path 210.

Third connection flow path 310 is connected to second cathode side outlet 203 of second electrochemical device 300. One end of valve 405 is connected to one end downstream of third connection flow path 310. A fourth connection flow path that supplies the third hydrogen-containing gas to hydrogen utilization equipment is connected to the other end of valve 405. The hydrogen utilization equipment is, for example, a fuel cell that generates electricity by using a hydrogen-containing gas.

Power supply 402b that applies a current to second cathode 206 from second anode 305 via second electrolyte membrane 204 is connected to second electrochemical device 300. As power supply 402b, a DC power supply that applies a current having a specified current value, that is, a constant current power supply is used. The positive pole of power supply 402b is electrically connected to second anode 305. The negative pole of power supply 402b is electrically connected to second cathode 206.

Second anode 305 has second anode catalyst layer 211 in contact with second electrolyte membrane 204, and second anode gas diffusion layer 312 in contact with second anode separator 208.

For second anode gas diffusion layer 312, a titanium powder sintered body plated with platinum, having a higher tensile strength than carbon paper made of carbon fibers, is used.

### [2-2. Operation]

The operation and action of hydrogen production apparatus 500 of the present exemplary embodiment, configured as described above, will be described below.

First, gas supply unit 401 supplies the first hydrogen-containing gas having a dew point temperature of 65°C to first anode 105 via first connection flow path 110, first anode side inlet 101, and the first anode flow path.

In the present exemplary embodiment, the first hydrogen-containing gas has a hydrogen content ratio of 79%, a carbon dioxide content ratio of 21%, and a carbon monoxide content ratio of 12 ppm. However, the numerical values of these content ratios are the content ratios of the first hydrogen-containing gas in the state where water vapor is removed, that is, in a dry state. The dew point temperature and content ratios of the first hydrogen-containing gas are not limited to the above numerical values.

While the first hydrogen-containing gas is being supplied to first anode 105, power supply 402a applies a current to first cathode 106 from first anode 105 via first electrolyte membrane 104.

Thereby, in first electrochemical device 100, an oxidation reaction to dissociate the hydrogen contained in the first hydrogen-containing gas into hydrogen ions and electrons is caused at first anode 105. The hydrogen ions permeate first electrolyte membrane 104 and move to first cathode 106. The electrons move to first cathode 106 via power supply 402a. At first cathode 106, a reduction reaction to combine the hydrogen ions and the electrons in order to generate hydrogen is caused. Thereby, at first cathode 106 of first electrochemical device 100, the second hydrogen-containing gas having a higher concentration of hydrogen than the first hydrogen-containing gas is generated.

In the present exemplary embodiment, the second hydrogen-containing gas has a hydrogen content ratio of 99%, a carbon dioxide content ratio of 1%, and a carbon monoxide content ratio of 2 ppm. However, the numerical values of these content ratios are the content ratios of the second hydrogen-containing gas in the state where water vapor is removed, that is, in a dry state. The content ratios of the second hydrogen-containing gas are not limited to the above numerical values.

At this time, the pressure value of the first hydrogen-containing gas in first connection flow path 110 is measured by pressure gauge 404a. Controller 403 controls the flow rates of the city gas and water supplied to gas supply unit 401 and the current value of the current that power supply 402a applies to first cathode 106 from first anode 105 via first electrolyte membrane 104, such that the pressure value of the first hydrogen-containing gas in first connection flow path 110 becomes an absolute pressure of 120 kPa. The pressure value, controlled by controller 403, of the first hydrogen-containing gas in first connection flow path 110 is not limited to the above numerical value.

By increasing or decreasing the flow rates of the city gas and water supplied to gas supply unit 401, the flow rate of the first hydrogen-containing gas discharged, that is, supplied from gas supply unit 401 can be increased or decreased. Additionally, by increasing or decreasing the current value of the current that power supply 402a applies to first cathode 106 from first anode 105 via first electrolyte membrane 104, the flow rate of the hydrogen moving from first anode 105 to first cathode 106, among the first hydrogen-containing gas supplied to first anode side inlet 101, that is, the flow rate of the second hydrogen-containing gas can be increased or decreased.

Among the first hydrogen-containing gas supplied to first anode side inlet 101, the first hydrogen-containing gas unused that has not moved from first anode 105 to first cathode 106 is discharged from first anode side outlet 102.

The second hydrogen-containing gas discharged from first cathode side outlet 103 of first electrochemical device 100 is supplied to second anode 305 via second connection flow path 210, and second anode side inlet 201 and a second anode flow path of second electrochemical device 300.

While the second hydrogen-containing gas is being supplied to second anode 305, power supply 402b applies a current to second cathode 206 from second anode 305 via second electrolyte membrane 204.

Thereby, in second electrochemical device 300, an oxidation reaction to dissociate the hydrogen contained in the second hydrogen-containing gas into hydrogen ions and electrons is caused at second anode 305. The hydrogen ions permeate second electrolyte membrane 204 and move to second cathode 206. The electrons move to second cathode 206 via power supply 402b. At second cathode 206, a reduction reaction to combine the hydrogen ions and the electrons in order to generate hydrogen is caused. Thereby, at second cathode 206 of second electrochemical device 300, the third hydrogen-containing gas having a higher concentration of hydrogen than the second hydrogen-containing gas is generated.

In the present exemplary embodiment, the third hydrogen-containing gas has a hydrogen content ratio of 99.97% and a carbon dioxide content ratio of 0.03%. However, the numerical values of these content ratios are the content ratios of the third hydrogen-containing gas in the state where water vapor is removed, that is, in a dry state. The content ratios of the third hydrogen-containing gas are not limited to the above numerical values.

At this time, the pressure value of the second hydrogen-containing gas in second connection flow path 210 is measured by pressure gauge 404b. Controller 403 controls the current value of the current that power supply 402b applies to second cathode 206 from second anode 305 via second electrolyte membrane 204, such that the pressure value of the second hydrogen-containing gas in second connection flow path 210 becomes an absolute pressure of 220 kPa. The pressure value, controlled by controller 403, of the second hydrogen-containing gas in second connection flow path 210 is not limited to the above numerical value.

By increasing or decreasing the current value of the current that power supply 402b applies to second cathode 206 from second anode 305 via second electrolyte membrane 204, the flow rate of the hydrogen moving from second anode 305 to second cathode 206, among the second hydrogen-containing gas supplied to second anode side inlet 201, that is, the flow rate of the third hydrogen-containing gas can be increased or decreased.

Among the second hydrogen-containing gas supplied to second anode side inlet 201, the second hydrogen-containing gas unused that has not moved from second anode 305 to second cathode 206 is discharged from second anode side outlet 202.

Further, the pressure value of the third hydrogen-containing gas in third connection flow path 310 is measured by pressure gauge 404c. Controller 403 adjusts the opening of valve 405 such that the pressure value of the third hydrogen-containing gas in third connection flow path 310 becomes an absolute pressure of 90 MPa. The pressure value, controlled by controller 403, of the third hydrogen-containing gas in third connection flow path 310 is not limited to the above numerical value.

When the opening is adjusted in a direction in which valve 405 is opened, the pressure value of the third hydrogen-containing gas in third connection flow path 310 decreases. When the opening is adjusted in a direction in which valve 405 is closed, the pressure value of the third hydrogen-containing gas in third connection flow path 310 increases. Therefore, by adjusting the opening of valve 405 as described above, hydrogen whose absolute pressure is compressed to 90 MPa, that is, the third hydrogen-containing gas can be obtained from second electrochemical device 300.

In the present exemplary embodiment, the ratio of the pressure value of the third hydrogen-containing gas at second cathode side outlet 203 to the pressure value of the second hydrogen-containing gas at second anode side inlet 201 is 409. The ratio of the pressure value of the second hydrogen-containing gas at first cathode side outlet 103 to the pressure value of the first hydrogen-containing gas at first anode side inlet 101 is 2.

### [2-3. Effects, etc.]

In hydrogen production apparatus 500 of the present exemplary embodiment, a titanium powder sintered body plated with platinum, having a higher tensile strength than carbon paper made of carbon fiber, that is, than the constituent material of second anode gas diffusion layer 212 of hydrogen production apparatus 400 of the first exemplary embodiment, is used as the constituent material of second anode gas diffusion layer 312, as described above. Thereby, the tensile strength of second anode gas diffusion layer 312 becomes higher than the tensile strength of first anode gas diffusion layer 112. Therefore, the tensile strength of second electrolyte membrane-electrode assembly 307 is higher than the tensile strength of first electrolyte membrane-electrode assembly 107. In this respect, hydrogen production apparatus 500 of the present exemplary embodiment is different from hydrogen production apparatus 400 of the first exemplary embodiment.

In hydrogen production apparatus 500 of the present exemplary embodiment, the tensile strength of second electrolyte membrane-electrode assembly 307 is higher than the tensile strength of first electrolyte membrane-electrode assembly 107. Therefore, the mechanical deterioration of second electrolyte membrane-electrode assembly 307 is suppressed when high-pressure hydrogen is circulated. Therefore, hydrogen production apparatus 500 includes first electrochemical device 100 whose main purpose is to purify hydrogen from a hydrogen-containing gas, and second electrochemical device 300 whose main purpose is to compress hydrogen. Therefore, the durability of second electrochemical device 300 whose main purpose is to compress hydrogen is further increased, and hydrogen production apparatus 500 that is highly durable can be provided.

### (Third exemplary embodiment)

Hereinafter, a third exemplary embodiment will be described with reference to FIG. 1.

### [3-1. Configuration]

The structural difference between hydrogen production apparatus 400 in the third exemplary embodiment and hydrogen production apparatus 400 in the first exemplary embodiment is that a first hydrogen-containing gas supplied from gas supply unit 401 in the third exemplary embodiment contains oxygen. Other configurations of hydrogen production apparatus 400 in the third exemplary embodiment are the same as those of hydrogen production apparatus 400 in the first exemplary embodiment.

The schematic view showing hydrogen production apparatus 400 in the third exemplary embodiment is the same as the schematic view of hydrogen production apparatus 400 in the first exemplary embodiment shown in FIG. 1, and duplicate description will be omitted.

### [3-2. Operation]

The operation and action of hydrogen production apparatus 400 of the present exemplary embodiment will be described below with reference to FIG. 1.

First, gas supply unit 401 supplies the first hydrogen-containing gas having a dew point temperature of 65°C to first anode 105 via first connection flow path 110, first anode side inlet 101, and the first anode flow path.

In the present exemplary embodiment, the first hydrogen-containing gas has a hydrogen content ratio of 79%, a carbon dioxide content ratio of 20%, an oxygen content ratio of 1%, and a carbon monoxide content ratio of 15 ppm. However, the numerical values of these content ratios are the content ratios of the first hydrogen-containing gas in the state where water vapor is removed, that is, in a dry state. The dew point temperature and content ratios of the first hydrogen-containing gas are not limited to the above numerical values.

While the first hydrogen-containing gas is being supplied to first anode 105, power supply 402a applies a current to first cathode 106 from first anode 105 via first electrolyte membrane 104.

Thereby, in first electrochemical device 100, an oxidation reaction to dissociate the hydrogen contained in the first hydrogen-containing gas into hydrogen ions and electrons is caused at first anode 105. The hydrogen ions permeate first electrolyte membrane 104 and move to first cathode 106. The electrons move to first cathode 106 via power supply 402a. At first cathode 106, a reduction reaction to combine the hydrogen ions and the electrons in order to generate hydrogen is caused. Thereby, at first cathode 106 of first electrochemical device 100, the second hydrogen-containing gas having a higher concentration of hydrogen than the first hydrogen-containing gas is generated.

In the present exemplary embodiment, the second hydrogen-containing gas has a hydrogen content ratio of 99.1%, a carbon dioxide content ratio of 0.9%, and an oxygen content ratio of 100 ppm. However, the numerical values of these content ratios are the content ratios of the second hydrogen-containing gas in the state where water vapor is removed, that is, in a dry state. The content ratios of the second hydrogen-containing gas are not limited to the above numerical values.

The oxygen contained in the first hydrogen-containing gas supplied to first anode 105 of first electrochemical device 100 is consumed by reacting with carbon monoxide, hydrogen, and the like in first anode catalyst layer 111. Therefore, the oxygen content of the second hydrogen-containing gas that has moved to first cathode 106 of first electrochemical device 100 is smaller than the oxygen content of the first hydrogen-containing gas at first anode 105.

At this time, the pressure value of the first hydrogen-containing gas in first connection flow path 110 is measured by pressure gauge 404a. Controller 403 controls the flow rates of the city gas and water supplied to gas supply unit 401 and the current value of the current that power supply 402a applies to first cathode 106 from first anode 105 via first electrolyte membrane 104, such that the pressure value of the first hydrogen-containing gas in first connection flow path 110 becomes an absolute pressure of 120 kPa. The pressure value, controlled by controller 403, of the first hydrogen-containing gas in first connection flow path 110 is not limited to the above numerical value.

By increasing or decreasing the flow rates of the city gas and water supplied to gas supply unit 401, the flow rate of the first hydrogen-containing gas discharged, that is, supplied from gas supply unit 401 can be increased or decreased. Additionally, by increasing or decreasing the current value of the current that power supply 402a applies to first cathode 106 from first anode 105 via first electrolyte membrane 104, the flow rate of the hydrogen moving from first anode 105 to first cathode 106, among the first hydrogen-containing gas supplied to first anode side inlet 101, that is, the flow rate of the second hydrogen-containing gas can be increased or decreased.

Among the first hydrogen-containing gas supplied to first anode side inlet 101, the first hydrogen-containing gas unused that has not moved from first anode 105 to first cathode 106 is discharged from first anode side outlet 102.

The second hydrogen-containing gas discharged from first cathode side outlet 103 of first electrochemical device 100 is supplied to second anode 205 via second connection flow path 210, and second anode side inlet 201 and the second anode flow path of second electrochemical device 200.

While the second hydrogen-containing gas is being supplied to second anode 205, power supply 402b applies a current to second cathode 206 from second anode 205 via second electrolyte membrane 204.

Thereby, in second electrochemical device 200, an oxidation reaction to dissociate the hydrogen contained in the second hydrogen-containing gas into hydrogen ions and electrons is caused at second anode 205. The hydrogen ions permeate second electrolyte membrane 204 and move to second cathode 206. The electrons move to second cathode 206 via power supply 402b. At second cathode 206, a reduction reaction to combine the hydrogen ions and the electrons in order to generate hydrogen is caused. Thereby, at second cathode 206 of second electrochemical device 200, the third hydrogen-containing gas having a higher concentration of hydrogen than the second hydrogen-containing gas is generated.

In the present exemplary embodiment, the third hydrogen-containing gas has a hydrogen content ratio of 99.97% and a carbon dioxide content ratio of 0.03%. However, the numerical values of these content ratios are the content ratios of the third hydrogen-containing gas in the state where water vapor is removed, that is, in a dry state. The content ratios of the third hydrogen-containing gas are not limited to the above numerical values.

At this time, the pressure value of the second hydrogen-containing gas in second connection flow path 210 is measured by pressure gauge 404b. Controller 403 controls the current value of the current that power supply 402b applies to second cathode 206 from second anode 205 via second electrolyte membrane 204, such that the pressure value of the second hydrogen-containing gas in second connection flow path 210 becomes an absolute pressure of 220 kPa. The pressure value, controlled by controller 403, of the second hydrogen-containing gas in second connection flow path 210 is not limited to the above numerical value.

By increasing or decreasing the current value of the current that power supply 402b applies to second cathode 206 from second anode 205 via second electrolyte membrane 204, the flow rate of the hydrogen moving from second anode 205 to second cathode 206, among the second hydrogen-containing gas supplied to second anode side inlet 201, that is, the flow rate of the third hydrogen-containing gas can be increased or decreased.

Among the second hydrogen-containing gas supplied to second anode side inlet 201, the second hydrogen-containing gas unused that has not moved from second anode 205 to second cathode 206 is discharged from second anode side outlet 202.

Further, the pressure value of the third hydrogen-containing gas in third connection flow path 310 is measured by pressure gauge 404c. Controller 403 adjusts the opening of valve 405 such that the pressure value of the third hydrogen-containing gas in third connection flow path 310 becomes an absolute pressure of 50 MPa. The pressure value, controlled by controller 403, of the third hydrogen-containing gas in third connection flow path 310 is not limited to the above numerical value.

When the opening is adjusted in a direction in which valve 405 is opened, the pressure value of the third hydrogen-containing gas in third connection flow path 310 decreases. When the opening is adjusted in a direction in which valve 405 is closed, the pressure value of the third hydrogen-containing gas in third connection flow path 310 increases. Therefore, by adjusting the opening of valve 405 as described above, hydrogen whose absolute pressure is compressed to 50 MPa, that is, the third hydrogen-containing gas can be obtained from second electrochemical device 200.

In the present exemplary embodiment, the ratio of the pressure value of the third hydrogen-containing gas at second cathode side outlet 203 to the pressure value of the second hydrogen-containing gas at second anode side inlet 201 is 227. The ratio of the pressure value of the second hydrogen-containing gas at first cathode side outlet 103 to the pressure value of the first hydrogen-containing gas at first anode side inlet 101 is 2.

### [3-3. Effects, etc.]

As described above, in hydrogen production apparatus 400 of the present exemplary embodiment, gas supply unit 401 is configured to supply the first hydrogen-containing gas containing oxygen in addition to hydrogen, water vapor, carbon dioxide, and carbon monoxide. In this respect, hydrogen production apparatus 400 of the present exemplary embodiment is different from hydrogen production apparatus 400 of the first exemplary embodiment.

Thereby, when the first hydrogen-containing gas containing oxygen and a trace amount of carbon monoxide is supplied to first anode catalyst layer 111, the oxygen oxidizes the carbon monoxide to carbon dioxide on the catalyst. Therefore, the catalyst poisoning is suppressed. Therefore, the chemical deterioration of first anode catalyst layer 111 is suppressed.

Further, the oxygen content of the second hydrogen-containing gas is smaller than the oxygen content of the first hydrogen-containing gas, that is, the oxygen content of the first hydrogen-containing gas is larger than the oxygen content of the second hydrogen-containing gas. Therefore, the chemical deterioration of second electrolyte membrane 204 due to oxygen is suppressed. Therefore, hydrogen production apparatus 400 includes first electrochemical device 100 whose main purpose is to purify hydrogen from a hydrogen-containing gas, and second electrochemical device 200 whose main purpose is to compress hydrogen. Therefore, the durability of both first electrochemical device 100 and second electrochemical device 200 is increased, and hydrogen production apparatus 400 that is highly durable can be provided.

Additionally, in the present exemplary embodiment, hydrogen production apparatus 400 may change, among the constituent materials of first electrolyte membrane 104 and second electrolyte membrane 204, the constituent material of second electrolyte membrane 204 from a fluorine-based electrolyte resin to a hydrocarbon-based electrolyte resin. In that case, as the hydrocarbon-based electrolyte resin, for example, a polymer material having sulfonated polystyrene as a skeleton and having hydrogen ion conductivity may be used.

By using a fluorine-based electrolyte resin as the constituent material of first electrolyte membrane 104, first electrolyte membrane 104 is more excellent in oxidation resistance, that is, oxidation resistance is more improved than when a hydrocarbon-based electrolyte resin is used. Therefore, the chemical deterioration of first electrolyte membrane 104 due to oxygen is suppressed even when the first hydrogen-containing gas containing oxygen is supplied to first anode 105.

Additionally, when the constituent material of second electrolyte membrane 204 is a hydrocarbon-based electrolyte resin, the second electrolyte membrane made of the hydrocarbon-based electrolyte resin is more excellent in gas barrier property, that is, a gas barrier property is more improved than second electrolyte membrane 204 made of a fluorine-based electrolyte resin. Therefore, the amount of hydrogen that permeates back from second cathode 206 to second anode 205 is reduced. Therefore, hydrogen production apparatus 400 having high durability and high purity can be provided.

### (Other exemplary embodiments)

As described above, the first to third exemplary embodiments have been described as examples of the technology disclosed in the present application. However, the technology in the present disclosure is not limited to these, and can also be applied to exemplary embodiments in which modifications, replacements, additions, omissions, etc., have been made. Additionally, new exemplary embodiments can also be made by combining the respective components described in the first to third exemplary embodiments. So, other exemplary embodiments will be illustrated below.

In the second exemplary embodiment, as an example of the hydrogen production apparatus, a titanium powder sintered body plated with platinum has been used as second anode gas diffusion layer 312 of second electrolyte membrane-electrode assembly 307. However, it is not limited to this.

For example, the second anode gas diffusion layer may be made of a material having high tensile strength, such as a titanium fiber sintered body plated with platinum or a high-strength carbon porous body. Thereby, the deterioration of the second electrolyte membrane-electrode assembly is suppressed, and a highly durable hydrogen production apparatus can be provided.

In the second exemplary embodiment, as an example of the hydrogen production apparatus, second anode gas diffusion layer 312 of second electrolyte membrane-electrode assembly 307 has been formed of a gas diffusion layer having high tensile strength. However, it is not limited to this.

For example, the second cathode gas diffusion layer of the second electrolyte membrane-electrode assembly may be formed of a titanium powder sintered body plated with platinum, instead of second anode gas diffusion layer 312. Additionally, for example, both second anode gas diffusion layer 312 and the second cathode gas diffusion layer may be formed of a titanium powder sintered body plated with platinum. Thereby, the deterioration of the second electrolyte membrane-electrode assembly is suppressed, and a highly durable hydrogen production apparatus can be provided.

In the second exemplary embodiment, as an example of the hydrogen production apparatus, second anode gas diffusion layer 312 of second electrolyte membrane-electrode assembly 307 has been formed of a gas diffusion layer having high tensile strength. However, it is not limited to this.

For example, the thickness of the second electrolyte membrane of the second electrolyte membrane-electrode assembly may be made larger than the thickness of first electrolyte membrane 104, so that the tensile strength of the second electrolyte membrane-electrode assembly is higher than the tensile strength of first electrolyte membrane-electrode assembly 107. Thereby, the deterioration of the second electrolyte membrane-electrode assembly is suppressed, and a highly durable hydrogen production apparatus can be provided.

In the third exemplary embodiment, as one example of the hydrogen production apparatus, a hydrocarbon-based electrolyte resin made of sulfonated polystyrene has been used as the constituent material of second electrolyte membrane 204 of second electrolyte membrane-electrode assembly 207. However, it is not limited to this.

For example, a hydrocarbon-based electrolyte resin such as sulfonated polyphenylene, sulfonated polybenzimidazole, or sulfonated polyether ether ketone may be used as the constituent material of the second electrolyte membrane.

Additionally, since the above exemplary embodiments are for illustrating the technology in the present disclosure, various modifications, replacements, additions, omissions, etc., can be made within the scope of the claims or equivalents thereof.

### INDUSTRIAL APPLICABILITY

The present disclosure can be applied to a hydrogen production apparatus in which two electrochemical devices are arranged side by side in series, in which a hydrogen-containing gas, which has been refined, that is, purified, and pressurized, that is, compressed, by a first electrochemical device, is further refined, that is, purified, and pressurized, that is, compressed, by a second electrochemical device. Specifically, the present disclosure can be applied to an on-site hydrogen production apparatus and the like.

### REFERENCE MARKS IN THE DRAWINGS

- 100: first electrochemical device
- 101: first anode side inlet
- 102: first anode side outlet
- 103: first cathode side outlet
- 104: first electrolyte membrane
- 105: first anode
- 106: first cathode
- 107: first electrolyte membrane-electrode assembly
- 108: first anode separator
- 109: first cathode separator
- 110: first connection flow path
- 111: first anode catalyst layer
- 112: first anode gas diffusion layer
- 113: first cathode catalyst layer
- 114: first cathode gas diffusion layer
- 200,300: second electrochemical device
- 201: second anode side inlet
- 202: second anode side outlet
- 203: second cathode side outlet
- 204: second electrolyte membrane
- 205,305: second anode
- 206: second cathode
- 207,307: second electrolyte membrane-electrode assembly
- 208: second anode separator
- 209: second cathode separator
- 210: second connection flow path
- 211: second anode catalyst layer
- 212,312: second anode gas diffusion layer
- 213: second cathode catalyst layer
- 214: second cathode gas diffusion layer
- 310: third connection flow path
- 400,500: hydrogen production apparatus
- 401: gas supply unit
- 402a,402b: power supply
- 403: controller
- 404a,404b,404c: pressure gauge
- 405: valve

## Claims

1. A hydrogen production apparatus comprising:
a gas supply unit that supplies a first hydrogen-containing gas containing hydrogen;
a first electrochemical device including
a first electrolyte membrane-electrode assembly including
a first electrolyte membrane,
a first anode that is disposed on one main surface of the first electrolyte membrane and causes an oxidation reaction to dissociate the hydrogen contained in the first hydrogen-containing gas into hydrogen ions and electrons, and
a first cathode that is disposed on another main surface of the first electrolyte membrane and causes a reduction reaction to combine the electrons and the hydrogen ions that have permeated the first electrolyte membrane in order to generate hydrogen,
a first anode separator having a first anode flow path formed such that the first hydrogen-containing gas flows on a surface in contact with the first anode and a first anode side inlet to make the first hydrogen-containing gas flow into an upstream of the first anode flow path, and a first cathode separator having a first cathode flow path formed on a surface in contact with the first cathode and a first cathode side outlet to make a second hydrogen-containing gas having a higher concentration of hydrogen than the first hydrogen-containing gas flow out from the first cathode flow path; and
a second electrochemical device including
a second electrolyte membrane-electrode assembly including
a second electrolyte membrane,
a second anode that is disposed on one main surface of the second electrolyte membrane and causes an oxidation reaction to dissociate the hydrogen contained in the second hydrogen-containing gas into hydrogen ions and electrons, and
a second cathode that is disposed on another main surface of the second electrolyte membrane and causes a reduction reaction to combine the electrons and the hydrogen ions that have permeated the second electrolyte membrane in order to generate hydrogen,
a second anode separator having a second anode flow path formed such that the second hydrogen-containing gas flows on a surface in contact with the second anode and a second anode side inlet to make the second hydrogen-containing gas flow into an upstream of the second anode flow path, and
a second cathode separator having a second cathode flow path formed on a surface in contact with the second cathode and a second cathode side outlet to make a third hydrogen-containing gas having a higher concentration of hydrogen than the second hydrogen-containing gas flow out from the second cathode flow path,
wherein a ratio of a pressure value of the third hydrogen-containing gas at the second cathode side outlet to a pressure value of the second hydrogen-containing gas at the second anode side inlet is higher than a ratio of a pressure value of the second hydrogen-containing gas at the first cathode side outlet to a pressure value of the first hydrogen-containing gas at the first anode side inlet.

2. The hydrogen production apparatus according to claim 1, wherein
the first anode separator further has a first anode side outlet to make an unused first hydrogen-containing gas flow out from a downstream of the first anode flow path, the unused first hydrogen-containing gas being a part of the first hydrogen-containing gas and being unused in the oxidation reaction by the first anode, and
the second anode separator further has a second anode side outlet to make an unused second hydrogen-containing gas flow out from a downstream of the second anode flow path, the unused second hydrogen-containing gas being a part of the second hydrogen-containing gas and being unused in the oxidation reaction by the second anode.

3. The hydrogen production apparatus according to claim 1 or claim 2, further comprising:
a first gas seal that is provided in the first electrochemical device in order to suppress leakage of the first hydrogen-containing gas circulating through the first electrolyte membrane-electrode assembly; and
a second gas seal that is provided in the second electrochemical device in order to suppress leakage of the second hydrogen-containing gas circulating through the second electrolyte membrane-electrode assembly,
wherein a pressure resistance of the second gas seal is higher than a pressure resistance of the first gas seal.

4. The hydrogen production apparatus according to any one of claims 1 to 3, wherein
the first electrolyte membrane-electrode assembly, the first anode separator, and the first cathode separator are substantially rectangular, and
the second electrolyte membrane-electrode assembly, the second anode separator, and the second cathode separator are substantially circular or substantially elliptical.

5. The hydrogen production apparatus according to any one of claims 1 to 4 wherein
the first anode has a first anode catalyst layer containing a platinum ruthenium alloy and an electrolyte resin on a side in contact with the first electrolyte membrane, and
the second anode has a second anode catalyst layer containing platinum and an electrolyte resin on a side in contact with the second electrolyte membrane.

6. The hydrogen production apparatus according to any one of claims 1 to 5, wherein a tensile strength of the second electrolyte membrane-electrode assembly is higher than a tensile strength of the first electrolyte membrane-electrode assembly.

7. The hydrogen production apparatus according to claim 6, wherein
the first anode has a first anode gas diffusion layer on a side where the first anode separator is provided for the first electrolyte membrane,
the second anode has a second anode gas diffusion layer on a side where the second anode separator is provided for the second electrolyte membrane, and
tensile strength of the second anode gas diffusion layer is higher than tensile strength of the first anode gas diffusion layer.

8. The hydrogen production apparatus according to any one of claims 1 to 7, wherein an oxygen content of the first hydrogen-containing gas is larger than an oxygen content of the second hydrogen-containing gas.

9. The hydrogen production apparatus according to any one of claims 1 to 8, wherein
a material of the first electrolyte membrane includes a fluorine-based electrolyte resin, and
a material of the second electrolyte membrane includes a hydrocarbonbased electrolyte resin.
